# EUROPEAN PATENT APPLICATION

(11) **EP 3 543 794 A1**
(43) Date of publication of application: **25.09.2019**
(21) Application number: 19163852.7
(22) Date of filing: 19.03.2019
(51) Int. Cl.: G03H 1/02, C25D 3/12, C25D 5/18, C25D 21/12, C25D 5/16

(54) **METHOD FOR CREATING HOLOGRAMS ON SURFACES OF ALUMINIUM ALLOYS**

(30) Priority: 21.03.2018 IT 201800003808
(71) Applicant: Piazzalunga, Nicola, 24048 Treviolo (BG) (IT)
(72) Inventor: Piazzalunga, Nicola, 24048 Treviolo (BG) (IT)
(74) Representative: Gatti, Enrico

(57) **Abstract**

A method for creating holograms on surfaces of aluminium alloys and similar, lacquered and adhesive-bonded products, comprising the steps of: performing a holographic recording of a subject on a glass support rendered photosensitive by the application of a photoresist; developing holographic recording; silvering said developed support; depositing on said developed support a layer of nickel by means of galvanic bath to form a first nickel plate with said subject in negative; obtaining, from said first nickel plate with said holographic recording in negative, a plurality of second nickel plates with said holographic recording in positive, by means of galvanic bath; creating a stamp arranging said plurality of second plates on said stamp in rows and columns; creating a holographic print matrix pressing said stamp on a PMMA or PET sheet; silvering said print matrix; creating a mother print plate in nickel from said print matrix by means of galvanic bath; said mother print plate having a greater thickness on two edges with respect to the centre of said mother print plate; creating copies and copies of said copies of said mother print plate with said holographic recording respectively in negative and in positive in nickel, by means of galvanic bath; using said copies of said copies of said mother print plate to print by engraving by means of an embosser said holographic recording on said surfaces of aluminium alloys and similar, lacquered and adhesive-bonded products.

## Description

The present invention refers to a method for creating holograms, in particular on surfaces of aluminium alloys.

It is applied in the reproduction of holograms on all surfaces of aluminium alloys and similar, lacquered and adhesive-bonded products, with thickness typically ranging from 3 micron to 5 mm, also treated with colours obtained from offset printing, gravure printing, flexography and epoxy powder coating.

Printing by hologram engraving on packaging and labels is becoming increasingly important for both aesthetic and security reasons. Since they cannot be reproduced by the use of scanners or photocopies, they are an excellent counterfeiting deterrent.

The object of the present invention is to provide a method for creating holograms on surfaces of aluminium alloys and similar, lacquered and adhesive-bonded products.

A further object of the present invention is to provide a method that is repeatable.

In accordance with the present invention, said objects and others still are achieved by a method for creating holograms on surfaces of aluminium alloys and similar, lacquered and adhesive-bonded products according to claim 1.

Further characteristics of the invention are described in the dependent claims.

In the phase of carrying out a holographic recording of a subject on a photosensitized support, by subject we mean any logo, pattern, image, wording, etc., and by support we mean any support that can be made photosensitive, for example glass.

The characteristics and advantages of the present invention will be evident from the following detailed description of a practical embodiment thereof, illustrated by way of non-limiting example in the attached drawings, in which:

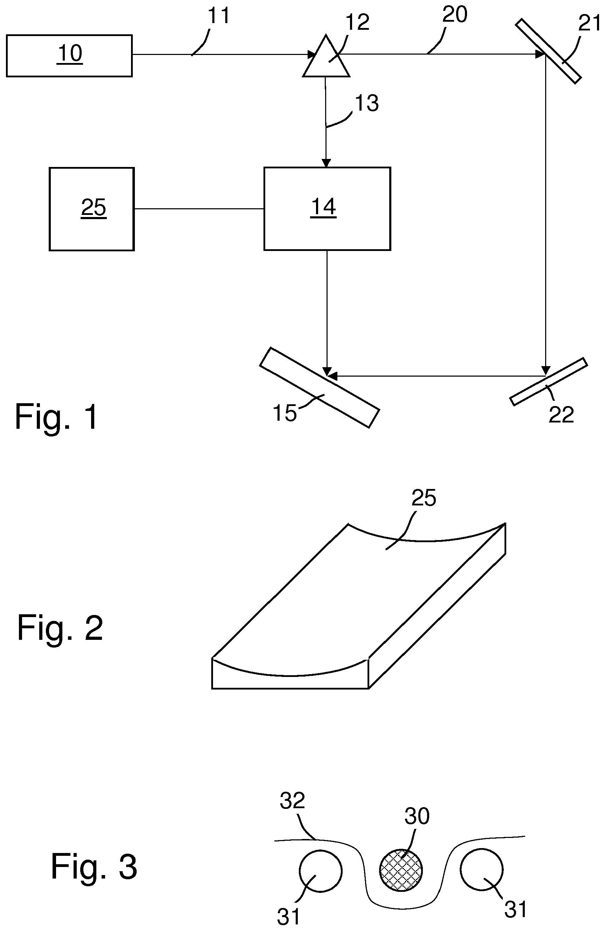

figure 1 schematically shows an example of a recording system for recording a hologram on a photosensitized glass panel compatible with the present invention;
figure 2 schematically shows the characteristics of a concave nickel printing plate compatible with the present invention;
figure 3 schematically shows a printing system for printing by means of embosser compatible with the present invention.

In the case of holographic recording of logos and/or patterns, the process can begin with the preparation of the latter via a software procedure that codifies the subject of the recording in a pixel matrix.

In this case, said pixels become the actual subject of the holographic recording, which can be carried out on a glass panel, for example with dimensions of 20 mm x 30 mm, photosensitized by the application of a particular material called photoresist.

The system for holographic recording on photosensitized glass panel can comprise a laser 10 which sends a first laser beam 11 to a prism (called beam splitter) 12, which splits the laser beam into two beams. The first of these two derived beams, called subject beam 13, passes through an LCD-TFT monitor 14, and then impinges a photosensitized glass panel 15. A second derived beam, called reference beam 20, also originates from the prism 12, and reaches a first mirror 21, a second mirror 22 and, lastly, the photosensitized glass panel 15, at an angle different from that of the subject beam 13. The interaction of the subject beam 13 and the reference beam 20 on the photosensitized glass panel generates interference fringes, the effects of which on the photosensitive material constitute the holographic recording. This process is typically performed on an anti-seismic table, or analogous system, because even small vibrations can affect the holographic recording process.

The logo and/or pattern can be created in three dimensions using a specific software program, which converts it into a set of images. These images are entered in another program which indexes them and creates a series of images in succession as in a film sequence. The latter program transfers this succession of images in sequence onto the LCD-TFT screen 14, which is crossed by the subject laser beam 13 before interfering with the reference beam 20 on the photosensitized glass panel 15. The maximum number of transmission pixels of this method must be 900 dpi for use with surfaces of aluminium alloys and similar, lacquered and adhesive-bonded products.

The exposure times of the photosensitized glass panel 15 to the laser are directly linked to the dimension of the image to be created and the power of the laser.

After exposure of the photosensitized glass panel to the laser, said panel contains the holographic recording, which is then developed; the development steps and methods depend on the type of photoresist material used and can comprise: washing in distilled water; removal of photoresist not exposed by means of liquids specific for the type of photoresist material; second washing in distilled water; immersion in development liquids specific for the type of photoresist material; third washing in distilled water; drying, typically in a specific oven.

After development, the glass panel with the holographic recording undergoes a silvering procedure, adapted to make the surface thereof electrically conductive and, therefore, suitable for the galvanic process described further on. The silvering process depends on the materials used and can comprise the following steps and methods: washing of the glass panel with the holographic recording in double-distilled water; application of an activator on the above-mentioned panel, by means of spray technology; rinsing of the above-mentioned panel with double-distilled water; application on the above-mentioned panel of silvering solution and retarding solution in equal parts by means of spray technology with dual nozzle; rinsing of the above-mentioned panel with double-distilled water; drying of the above-mentioned panel with filtered compressed air.

The glass panel with the silvered holographic recording is then immersed in a galvanic bath containing nickel sulfamate, the operating conditions of which depend on the dimensions of the above-mentioned panel and of the bath itself, until a nickel plate is deposited on the silvered surface of the above-mentioned panel; said plate has a thickness of approximately 50 *µ*m and will contain a holographic recording on the surface in contact with the surface of the glass panel bearing the holographic recording.

The film obtained is removed from the glass panel.

The holographic recording on the above-mentioned nickel plate will be a negative of the holographic recording on the glass panel.

Starting from the nickel plate bearing the holographic recording (or a copy thereof bearing the negative of the holographic recording of the above-mentioned plate produced by galvanic process), finer nickel plates (6/7 *µ*m) bearing the negative copies of the holographic recording present on the first nickel plate are produced, by means of galvanic process. Said fine copies are suitable for the recombination process.

The recombination process is carried out in a machine, called recombiner, which uses a stamp, on which the fine nickel plates bearing the holographic recording are applied, in order to print, by stamping, the holographic recording in lines and columns on a sheet, typically made of polymethyl methacrylate (PMMA) or polyethylene terephthalate (PET), obtaining a print matrix, the fields of which each contain a negative copy of the holographic recording of the nickel plates used on the recombiner stamp. The number of lines and columns of said print matrix depend on the modular dimensions and characteristics of the holographic recording. The total dimensions of the print matrix are typically 1000 mm x 1000 mm.

The settings of the recombiner can be the following. The recombiner head is positioned where the nickel plate is mounted, the operating temperature is set to 130°C, the pressure of the stamping head is adjusted to approximately 10-12 bars and the pressure duration from 3 to 6 seconds; lastly, the PMMA (or PET) sheet is correctly positioned and the machine is started.

The PMMA sheet, now called print matrix, is then positioned on a flat horizontal surface, inside a room suitable for painting, and the spray silvering is performed, as previously actuated, paying particular attention to the ambient temperatures, due to the large surface area to be silvered.

Once the silvering step of the print matrix has been completed, the latter is placed in the galvanic bath, with the face containing the holographic recordings facing the bath baskets and proceeding, by means of galvanic process, with the creation of a nickel mother plate 25 bearing the negative copy of the holographic recordings contained on the print matrix.

Said nickel mother plate 25 shall be concave relative to the horizontal axis, so that it is compatible with the print cylinders of the embosser described further on. Said concavity is achieved by appropriate operation of the galvanic bath as described below. In particular, during the galvanic bath the material accumulates firstly and in a greater quantity around the edges and in a lesser quantity (decreasing) towards the centre of the plate. By aligning the edges of the plate on which a greater thickness of metal is desired with the bath electrodes, an accumulation occurs mainly only on two of the sides of the plate and a typical thickness of 120 *µ*m is obtained on the edge compared to 80 *µ*m in the centre (and on the other two sides). This difference in thickness of at least 40 *µ*m gives the plate a concave shape.

The galvanic bath in which the nickel mother plate is produced contains nickel sulfamate and can have the following parameters: density at 20°C approximately 35 °Bé, pH at 20°C approximately 5.5 and minimum operating temperature 42°C; the distance of the print matrix from the baskets is approximately 30 cm, the complete translation time is 8 seconds, and the standstill time is 4 seconds. The process consists of four phases: first phase, lasting approximately 12 hours, with current of approximately 8 A; second phase, lasting approximately 4 hours, with current of approximately 20 A; third phase, lasting approximately 14 hours, with current of approximately 60 A; fourth phase, lasting approximately 8 hours, with current of approximately 120 A. The product of said operation is a nickel plate with thickness of approximately 150 *µ*m bearing holographic recording, of multiples of the logo and/or pattern, on the face in contact with the print matrix and concave with respect to the horizontal axis.

The nickel mother plate is then carefully and gently detached from the print matrix and, by means of galvanic process, a negative copy is made of the holographic recording of the master plate on a multitude (typically 3) of daughter plates.

To do this, the mother plate is fixed on a steel plate carrier, which must have dimensions equal to or greater than the dimensions of the print matrix, with the face of the mother plate bearing the holographic recording facing the outside, ensuring that the orientation of the concavity is observed, i.e. parallel to the horizontal plane, and covering the surface of the steel plate carrier left exposed with insulating material.

The galvanic bath inside which the nickel daughter plates are produced contains nickel sulfamate and can have the following parameters: density at 20°C approximately 35 °Bé, pH at 20°C approximately 5.5 and minimum operating temperature 42°C; the distance of the print matrix from the baskets is approximately 30 cm, the complete translation time is 6 seconds, and the standstill time is 3 seconds. The process is carried out in one single phase lasting approximately 7 hours, with current of approximately 160 A. The product of said operation is a nickel plate with mean thickness of approximately 100 *µ*m bearing holographic recording on the face in contact with the mother plate and concave with respect to the horizontal axis.

The daughter plate is then carefully and gently detached from the mother plate and, again by galvanic process, a negative copy is made of the holographic recording of the daughter plates on a multitude (according to production requirements) of grandchildren plates.

To do this, the daughter plate is fixed on the above-mentioned steel plate carrier with the face of the daughter plate bearing the holographic recording facing outwards, ensuring that the orientation of the concavity is observed, i.e. parallel to the horizontal plane, covering the surface of the steel plate carrier that is left exposed with insulating material.

The galvanic bath in which the nickel daughter plates are produced contains nickel sulfamate and can have the following parameters: density at 20°C approximately 35 °Bé, pH at 20°C approximately 5.5 and, this time, minimum operating temperature of approximately 48°C (allowing the production of harder plates); the distance of the print matrix from the baskets is now approximately 16 cm, the complete translation time is 3 seconds, and the standstill time is 1.5 seconds. The process is carried out in one single phase lasting approximately 3 hours, with current of approximately 190 A. The product of said operation is a nickel plate with thickness of approximately 80 *µ*m bearing holographic recording on the face in contact with the daughter plate, concave with respect to the horizontal axis, mirror polished (using appropriate abrasive pastes or sandpaper and felt discs) on the face opposite the holographic recording and suitably hard.

The rear mirror surface, the hardness and the concavity of the nickel plates are fundamental for their use inside the embosser. The rear mirror surface is important, because every imperfection in the rear surface, during the pressure printing, is reflected in the hologram. The hardness of the plates is necessary because the plates must engrave a hard material like aluminium and the hardness ensures both effectiveness and efficiency. The concavity, on the other hand, is necessary to counter the forces acting in the mechanism, due to the fixing method of the plate on the embosser cylinder, by fixing the lateral part of the plate to its cylinder, and for the convexity of the embosser thrust cylinders. This is fundamental and allows holographic recording even on wide aluminium surfaces.

In all the processes described above, thorough cleaning should not be neglected. The laser creation part, the subsequent recombination and the last phases of the galvanic process can be easily rendered useless and ineffective if the surfaces are not thoroughly clean.

After producing the grandchildren plates in a sufficient number for the production, they are used as print matrixes for the embosser, which is to all intents and purposes a holographic machine, i.e. a machine that transfers in a continuous cycle the holographic recording present on the nickel plate onto the aluminium alloy surface (and similar products).

The embosser normally comprises a plate carrier cylinder 30 (the nickel plate bearing the holographic recording) and two thrust cylinders 31, which exert the pressure to impress the hologram on the aluminium sheet 32; said cylinders are chromium-plated, lapped to a mirror finish and convex with respect to their longitudinal axis, in a manner compatible with the concavity of the nickel plates. For example, for the processing of aluminium alloy surfaces with widths from 290 mm to 450 mm, the thrust cylinders must have a difference in diameter of 10 *µ*m and a thrust pressure of approximately 10 bars. The pressure varies according to the width of the aluminium surface (and similar products) onto which the holographic recording has to be transferred; the wider the surface, the more pressure is required by the cylinders to obtain a uniform recording.

The process, according to the present invention, allows both aesthetic and security holograms to be obtained.

Furthermore, different security levels can be provided.

A first, simplest, level consists in the difficulty of replicating the production process in terms of both method and financial outlay.

A second security level is represented by the fact that the table processing produces random incisions that make each specific hologram difficult to replicate other than with very high costs, due to the uniqueness of their end product. These chaotic effects can be stored in a register and detected by a specific control device.

A third security level consists in generation of the hologram with encryption characteristics through specific algorithms. The originality of the hologram can then be detected by use of the associated encryption key.

## Claims

1. A method for creating holograms on surfaces of aluminium alloys and similar, lacquered and adhesive-bonded products, comprising the steps of:
performing a holographic recording of a subject on a glass support rendered photosensitive by the application of a photoresist; developing the holographic recording; silvering said developed support; depositing on said developed support a layer of nickel by means of galvanic bath to form a first nickel plate with said subject in negative;
obtaining, from said first nickel plate with said holographic recording in negative, a plurality of second nickel plates with said holographic recording in positive, by means of galvanic bath; creating a stamp arranging said plurality of second plates on said stamp in rows and columns; creating a holographic print matrix pressing said stamp on a PMMA or PET sheet; silvering said print matrix;
creating a mother print plate in nickel from said print matrix by means of galvanic bath; said mother print plate having a greater thickness on two edges with respect to the centre of said mother print plate; creating copies and copies of said copies of said mother print plate with said holographic recording respectively in negative and in positive in nickel, by means of galvanic bath; using said copies of said copies of said mother print plate to print by engraving by means of an embosser said holographic recording on said surfaces of aluminium alloys and similar, lacquered and adhesive-bonded products.

2. The method according to claim 1, **characterized in that** said mother print plate and said copies of said copies are concave with respect to the cross section thereof.

3. The method according to claim 1, **characterized in that** said copies of said copies of said mother print plate used to print by means of embosser are concave with respect to the cross section thereof, and are hardened by means of galvanic bath and have the mirror finish rear surface.

4. The method according to claim 1, **characterized in that** the step of creating a holographic print matrix is performed at an operating temperature of 130°C, a pressure of said stamp of approximately 10-12 bar and pressure duration from 3 to 6 seconds.

5. The method according to one of the preceding claims **characterized in that** said silvering steps are performed by means of spray silvering.

6. The method according to claim 1, **characterized in that** said galvanic bath is performed in four phases with increasing current values.

7. The method according to claim 1, **characterized in that** the step of creating a mother print plate in nickel from said print matrix by means of galvanic bath comprises the step of aligning the edges of said mother print plate on which a greater metal thickness is required with the electrodes of the bath.
